# FASCICULE DE BREVET EUROPEEN

(11) **EP 2 554 080 B1**
(45) Date de publication et mention de la délivrance du brevet: **21.09.2016**
(21) Numéro de dépôt: 12177225.5
(22) Date de dépôt: 20.07.2012
(51) Int. Cl.: A47J 27/00, B21D 51/22, A47J 27/022, A47J 36/02

(54) **Procédé de fabrication d'un récipient de cuisson à déformation contrôlée et récipient obtenu**
Verfahren zur Herstellung eines Kochgefäßes mit kontrollierter Verformung und das Kochgefäß erhalten
A method of manufacturing a cooking vessel with controlled deformation and cooking vessel obtained

(30) Priorité: 03.08.2011 FR 1157134
(43) Date de publication de la demande: 06.02.2013
(73) Titulaire: SEB SA, 69130 Ecully (FR)
(72) Inventeur: Maillard, Philippe, 74150 Moye (FR); Inclair, Fabien, 74540 Mûres (FR)
(74) Mandataire: Novagraaf Technologies

(56) Documents cités:
- EP-A1- 1 479 329
- DE-A1- 1 679 090
- FR-A1- 2 693 093
- FR-A1- 2 755 887
- FR-A1- 2 852 219

## Description

L'invention concerne un procédé de fabrication d'un récipient de cuisson, ou article culinaire, devant servir de récipient pour cuire ou plus généralement chauffer des aliments.

Est déjà connu un tel procédé pour un récipient comprenant :
- un fond comportant une couche métallique, une couche à base d'aluminium et une couche à base d'acier,
- et une paroi latérale se dressant en périphérie du fond et comportant la couche métallique.

Un problème technique qui se pose est de permettre d'éviter, ou du moins réduire, une déformation non souhaitée du récipient lors de sa fabrication, quand celle-ci est réalisée avec au moins une frappe à chaud.

En effet, typiquement, une fabrication prévoyant le passage dans une presse d'une plaque devant former tout ou partie du récipient, comme dans EP-A- 0 928 587, permet a priori d'obtenir un récipient creux.

Par contre, l'impact de la frappe sur une plaque ou sur un récipient déjà au moins en partie formé (même s'il s'agit d'une frappe à chaud) déforme l'article de façon aléatoire. Il peut en particulier y avoir, vers la base de la paroi latérale, des déformations exagérées entre les dimensions D1 et D2 figure 9 qui illustre l'art antérieur, voire des variations d'épaisseurs de paroi e1,e2 (e1 >e2).

D'autres procédés de fabrication des récipients de cuisson sont connus de FR 2 755 887 A1 et FR 2 852 219 A1.

C'est dans ce contexte que se situe le problème technique ci-dessus évoqué.

Pour en tenir compte, il est proposé un procédé de fabrication d'un récipient de cuisson selon la revendication 1.

Dans la description, on doit comprendre l'expression « à base de » comme composé à plus de 60% d'aluminium, ou de fer (pour l'acier).

Bien qu'un acier inoxydable (pour la plaque métallique) favorise le contrôle des déformations D1/D2 en particulier et donc une limitation de la déformation aléatoire qui risque de se produire lors de la fabrication de la paroi du récipient, on peut ici tout à fait, pour cette plaque métallique, utiliser une plaque à base d'aluminium, ici de qualité culinaire/alimentaire. L'utilisation des plaques disposées dans des plans sensiblement parallèles entre eux à l'étape a) permet donc de contrôler et limiter ces déformations. En outre, ceci sécurise l'emploi de la presse, ou plus généralement du matériel, utilisé à l'étape c) pour frapper et déformer.

La plaque à base d'acier creuse en forme de coupelle présente un fond et une paroi latérale (de faible hauteur rapportée à son diamètre s'il s'agit d'un disque).

L'avantage d'une telle coupelle est de bien contrôler la déformation de la masse d'aluminium. Les parois latérales de la coupelle guident la matière lors de la frappe. La masse d'aluminium est concentrée dans la coupelle.

Pour favoriser la maîtrise recherchée des déformations, on conseille par ailleurs que, lors de l'étape c), seule la plaque métallique soit déformée.

Ainsi, la mise à la forme du récipient final de la plaque métallique ne viendra pas interférer avec celle de la plaque en acier.

Dans certaines situations, en particulier lorsqu'un gain de l'emboutissage préalable de la coupelle acier est recherché, on préfère toutefois choisir qu'un bord périphérique de la plaque à base d'acier et la plaque métallique soient déformés lors de l'étape c).

Pour éviter des mouvements intempestifs d'autant plus gênants que l'on cherche ici à obtenir des récipients ayant, sur la chaine de fabrication, la même forme de façon répétitive, on conseille par ailleurs qu'avant l'étape de frappe b), les plaques soient fixées ensemble par soudure.

Pour rendre le récipient compatible avec un chauffage par induction, on recommande d'utiliser un acier inoxydable ferritique pour la plaque à base d'acier. Ce type d'acier n'altère pas la qualité de fabrication recherchée.

Pour faciliter la gestion des flux lors des phases de fabrication et limiter les risques d'endommagement de presses, ainsi que leur complexité de réalisation, on conseille par ailleurs que, lors de l'étape c) :
- c1) on frappe d'abord la plaque à base d'acier vers la plaque métallique, à ladite température où la plaque à base d'aluminium est ramollie,
- c2) puis, après cette étape de frappe, on déforme la plaque métallique de façon à former le fond et la paroi latérale.

Pour renforcer encore ce qui précède, on conseille de conduire l'étape c2) à température ambiante.

Dans le cadre de la présente invention est également concerné un récipient de cuisson, ou article culinaire, en soi.

Comme indiqué ci-avant, est déjà connu un tel récipient comprenant :
- un fond comportant une première couche à base d'aluminium, une couche à base d'acier et une deuxième couche à base d'aluminium disposée entre la couche métallique et la couche à base d'acier,
- et une paroi latérale se dressant en périphérie du fond et comportant la première couche à base d'aluminium.

Une particularité de la présente solution qui permet d'obtenir des récipients de même forme répétitive est liée non seulement au fait qu'il est obtenu par le procédé défini ci-avant, avec tout ou partie de ses caractéristiques, mais aussi au fait que:
- le rapport entre l'épaisseur de la paroi latérale et l'épaisseur du fond est inférieur à 0,6,
- et/ou l'épaisseur du fond est supérieure ou égale à 5mm,
- et/ou l'épaisseur de la paroi latérale est inférieure à 4mm.

Sont concernés des gains :
- en matière,
- et/ou en précision de forme (déformation contrôlée comme indiqué ci-avant),
- et/ou en cadences ou coûts de fabrication,
- et/ou de tenue aux chocs thermiques, ainsi que dans le temps.

Pour favoriser en particulier ce dernier point, on conseille que la couche à base d'acier soit un disque plein dont la face inférieure est creusée d'empreintes concaves de rigidification.

Une solution avec ces caractéristiques cumulées sera donc d'autant plus avantageuse.

D'autres caractéristiques et avantages de l'invention pourront encore ressortir de la description ci-après faite en référence aux dessins annexés fournis à titre d'exemple. Dans ces dessins :
- les figures 1, 2, 3 représentent en coupe verticale trois étapes de fabrication d'un article culinaire formant récipient pour la cuisson d'aliments sur une plaque (gaz, électrique ou induction) ; pour réaliser la couche centrale la plus extérieure du fond, on part d'une coupelle préformée;
- les figures 4, 5, 6 représentent en coupe verticale une alternative de fabrication à nouveau d'un récipient pour de cuisson d'aliments sur une plaque ; pour réaliser la couche centrale la plus extérieure du fond, on part d'une plaque plane;
- la figure 7 est une vue dans le sens de flèche VII;
- la figure 8 est une coupe verticale dans la zone VIII de la figure 7,

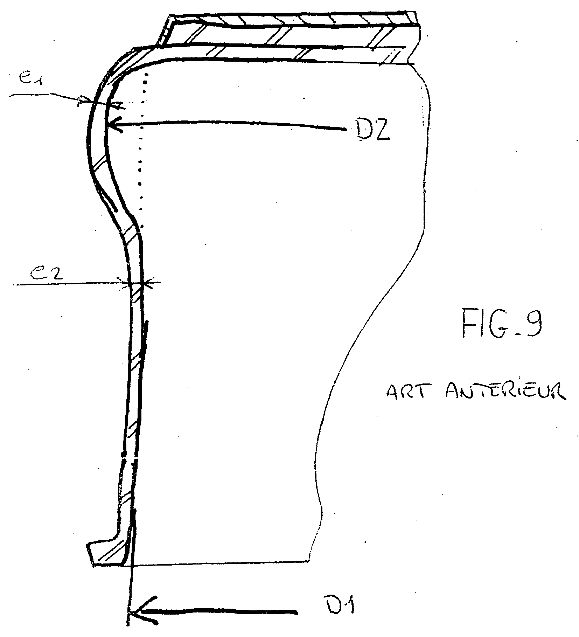

- la figure 9 est une coupe verticale partielle d'un récipient de l'art antérieur.

Dans ce qui suit, et d'ailleurs dans tout le texte, ainsi que sur les illustrations, on doit considérer que les variantes peuvent en tout ou partie se combiner.

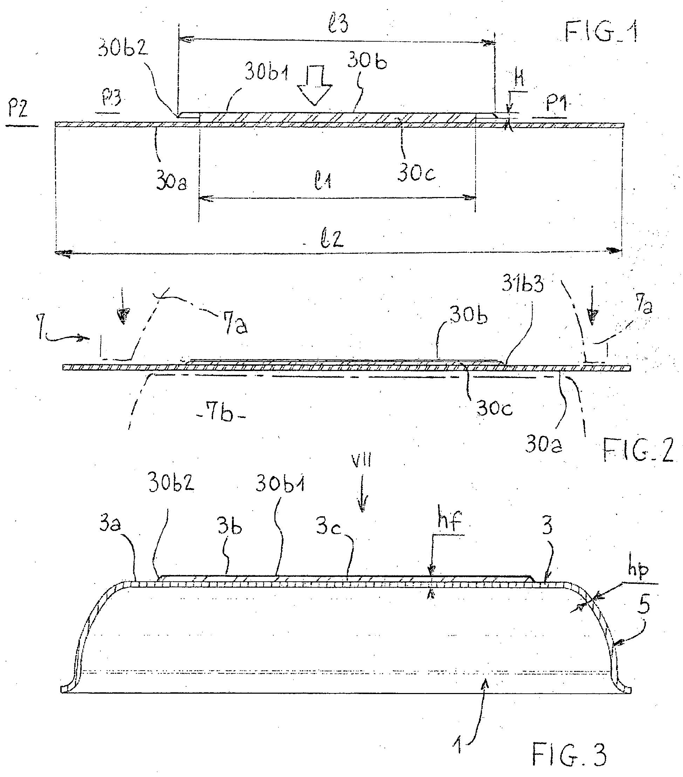

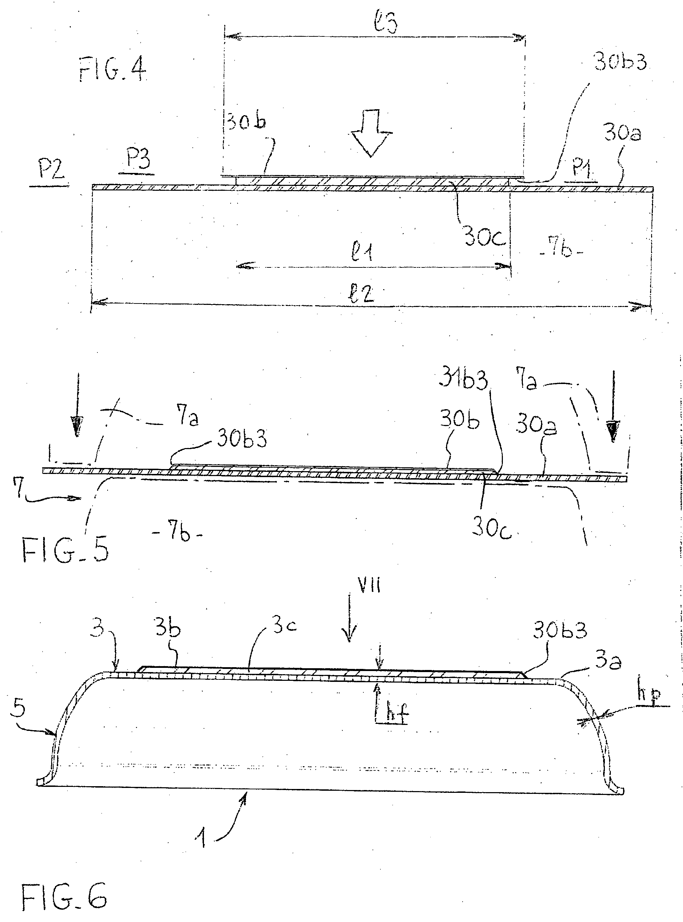

Figures 3, 6 est illustré un récipient de cuisson 1 présentant :
- un fond 3 comportant une couche métallique 3a, une couche en acier 3b et une couche intermédiaire en aluminium 3c disposée entre la couche métallique et la couche en acier,
- et une paroi latérale 5 se dressant en périphérie du fond 3 et comportant la couche métallique 3a.

Ce récipient est obtenu par le procédé défini selon l'une des possibilités ci-après.

Il présente comme autre particularité que :
- le rapport entre l'épaisseur hp de la paroi latérale et l'épaisseur du fond hf est inférieur à 0,6 avec un récipient à paroi latérale à base d'aluminium,
- l'épaisseur du fond hf est supérieure ou égale à 5 mm,
- l'épaisseur hp de la paroi latérale est inférieure à 4 mm.

Le procédé de fabrication du récipient 1 comprend les étapes suivantes, comme illustré figures 1-3 et 4-6:
- a) on dispose, .dans des plans P1, P2, P3 sensiblement parallèles entre eux des plaques sensiblement planes. On entend par plan(e) ou sens plan que les plaques ne sont pas encore frappées. En particulier, on dispose, respectivement, une plaque d'aluminium 30c entre une plaque métallique 30a et une plaque d'acier 30b,
- b) on chauffe les plaques 30a, 30b, 30c jusqu'au moins à une température de ramollissement de la plaque d'aluminium 30c,
- c), on frappe la plaque à base d'acier 30b vers la plaque métallique 30a, ceci à une telle température où la plaque d'aluminium 30c est ramollie, et on déforme la plaque d'aluminium 30c de sorte à former ensemble ledit fond, alors multicouches, 3 et la paroi latérale 5.

Chaque plaque 30a, 30b, 30c devient une partie au moins d'une dite couche respective 3a, 3b, 3c.

On peut considérer figures 3, 6 qu'une fois cet enchainement réalisé, les plaques 30a, 30b, 30c sont ainsi devenues les couches 3a, 3b, 3c du récipient 1 fabriqué, le fond 5 comprenant les trois couches 3a, 3b, 3c.

La plaque d'acier, la plaque d'aluminium et la plaque métallique adhérent entre-elles.

Il y a liaisons métalliques. Un fluage de la plaque d'aluminium a eu lieu lors de la frappe.

La plaque plane d'acier 30b peut être légèrement concave. Cependant elle n'est pas adaptée à être frappée pour former la paroi latérale 5 comme dans l'étape c).

On conseille que la température lors de l'étape de chauffage b) soit supérieure à 350°C.

Afin de sécuriser la qualité du positionnement des plaques 30a, 30b, 30c entre elles, on conseille par ailleurs qu'avant la frappe (impact bonding en anglais) de l'étape c), et même avant l'étape de chauffe b) ces plaques soient fixées ensemble par soudure.

Dans le mode de fabrication des figures 1-3, on est parti, lors de l'étape a) (figure 1), d'une plaque d'acier 30b creuse en forme de coupelle présentant un fond 30b1 et une paroi latérale 30b2. Cette coupelle conserve toutefois une forme générale de plaque plane (du fait de la faible concavité : H de l'ordre de 0,3 à 1cm figure 1, pour un diamètre (13) de coupelle 30b de l'ordre de 15 à 25/28cm). Le diamètre ou largeur de la plaque d'acier 30b est supérieure à celui de la plaque d'aluminium 30c. Le diamètre de la- plaque d'acier correspond sensiblement au diamètre du fond 3 du récipient.

Au moins dans ce cas, de préférence, lors de l'étape c), et bien que la frappe et la déformation précitées puissent s'effectuer dans une continuité opérationnelle, a priori dans une même presse :
- c1) on frappera la plaque d'acier 30b vers la plaque métallique 30a (voir flèche figure 1 et résultat figure 2), la masse d'aluminium se trouve ainsi concentrée dans la plaque d'acier 30b du fait de sa largeur et de sa forme de coupelle, c'est-à-dire qu'elle ne déborde pas,
- c2) puis, après cette étape de frappe, on emboutira la plaque métallique (voir flèches figure 2) de façon à former le fond 3 et la paroi latérale 5 (voir figure 3).

Lors de l'étape c), seule la plaque métallique 30a sera ainsi, à l'étape c2), déformée par pliure pour former le récipient 1.

A priori, l'étape c1) s'effectuera plaques chaudes, avec au moins la plaque d'aluminium 30c à sa température de ramollissement, l'étape c2) s'effectuant plus tard, à plus basse température : a priori température inférieure à la température mini à partir de laquelle la plaque à base d'aluminium est ramollie. Typiquement, on pourra effectuer l'étape c2) à froid, c'est-à-dire à température ambiante, entre 15 et 35°C.

Pour cette étape c2), des matrices supérieure 7a et inférieure 7b d'une presse (figure 2) sont de préférence placées de part et d'autre des plaques 30b et 30a pour guider la mise en forme de la plaque 30a afin de lui donner la forme de calotte attendue (figure 3).

Dans les plans précités concernés, les plaques d'aluminium 30c et d'acier 30b ont à l'origine (étape a, figure 1) des largeurs qui peuvent être respectivement l1, l3 et qui sont chacune inférieure à celle l2 de la plaque métallique. En particulier, la plaque d'aluminium a une largeur l3 inférieure à celle de la plaque d'acier 30b.

Tout ou partie de ces plaques 30a, 30b, 30c peut être un disque. Les largeurs seront alors des diamètres.

La frappe à chaud de la plaque d'acier a entrainé la déformation de la plaque 30c d'aluminium et une liaison desdites plaques entre-elles par le fluage de cette plaque d'aluminium 30c.

Il y a liaisons métalliques au moins entre les plaques d'acier 30b et d'aluminium 30c d'une part et les plaques d'aluminium 30c et métallique 30a d'autre part.

De préférence, la plaque métallique 30a sera en aluminium ou à base d'aluminium.

On conseille en outre que la plaque (à base) d'acier 30b soit pleine. Ceci, en liaison avec le procédé de fabrication ci-avant qui permet de contrôler la répétitivité des épaisseurs, doit :
- éviter tout problème de rayure sur certaines plaques de cuisson (particulièrement vitrocéramiques),
- renforcer la tenue à la déformation dans le temps d'un récipient de ce type prévu pour être chauffé sous son fond, tel une casserole ou une poêle,
- favoriser la rapidité d'un tel chauffage,
- assurer une compatibilité performante avec un chauffage par induction : plaque/couche 30b alors magnétisable, de préférence en/à base d'acier inoxydable ferritique.

Dans le cas des figures 4-6, la plaque à base d'acier 30b est réalisée à partir d'une plaque plane (figure 4).

Et l'on voit figures 5, 6 qu'un bord périphérique 30b3 de cette plaque (à base) d'acier et la plaque métallique 30a sont déformés lors de l'étape précédemment dénommée c).

Pour cela, comme illustré, on peut prévoir comme précédemment que lors de cette étape c) (à nouveau bien que la frappe et la déformation précitées puissent s'effectuer dans une continuité opérationnelle, a priori dans une même presse) :
- c1) de frapper à chaud (hot stamping ; température précitée ≥ 350°C) la plaque d'acier 30b vers la plaque métallique 30a (voir flèche figure 4 et résultat figure 5),
- c2) puis, après cette étape de frappe, et de préférence à température ambiante (voir avantage ci-avant), d'emboutir la plaque métallique (voir flèches figure 5) de façon à former le fond 3 et la paroi latérale 5 (voir figure 6).

Comme précédemment, la frappe à chaud de la plaque d'acier a entrainé la déformation de la 'plaque 30c d'aluminium et une liaison desdites plaques entre-elles par le fluage de cette plaque d'aluminium 30c ; et la plaque d'acier s'est elle-même déformée de façon contrôlée pour présenter sa paroi latérale inclinée de biais 30b3 qui vient (sensiblement) au contact avec la plaque 30a, par son extrémité 31b3 (ce contact existe d'ailleurs aussi figure 2). La masse d'aluminium se retrouve également concentrée dans la plaque d'acier 30b. Elle ne déborde pas.

Pour l'étape c2) ci-dessus, on conseille à nouveau d'utiliser des matrices supérieure 7a et inférieure 7b d'une presse (figure 5) de préférence placées de part et d'autre des plaques 30b et 30a pour guider la mise en forme de la plaque 30a afin de lui donner la forme de calotte attendue (figure 6).

Cette solution de partir d'une plaque plane (à base) d'acier permet notamment d'éviter une étape supplémentaire d'emboutissage visant à obtenir la coupelle que forme la plaque 30b figure 1, antérieurement à la mise en place de ces plaques 30a, 30b, 30c et à leur assemblage, avec conformation en calotte de la plaque 30a.

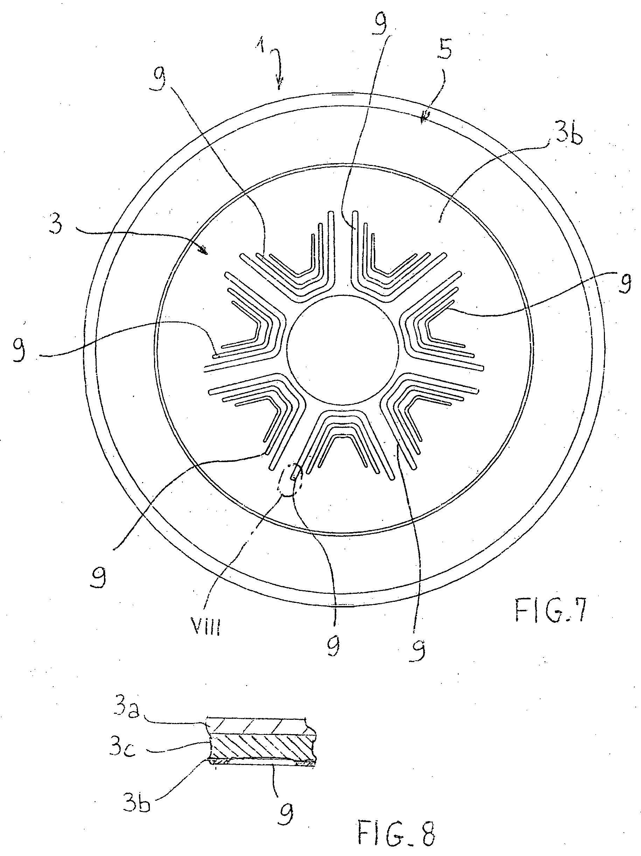

Figure 7, 8 on voit que le fond 3 du récipient de cuisson 1 obtenu est creusé d'empreintes concaves de rigidification 9. Il s'agit donc de fentes non débouchantes en ce qu'elles ne traversent pas la couche extérieure 3b métallique du fond. Associées au fond multicouche à épaisseur contrôlée, ceci favorise la tenue aux chocs thermiques, lors des passages de l'article sur la table de cuisson, et plus généralement la résistance aux déformations, du fait de l'équivalent d'un nervurage.

Un revêtement en PTFE ou émail peut être appliqué sur la paroi latérale 5, formée par la plaque métallique 30a.

## Revendications

1. Procédé de fabrication d'un récipient (1) de cuisson comprenant un fond (3) comportant une couche métallique (3a), une couche à base d'aluminium (3c) et une couche à base d'acier (3b), et une paroi latérale (5) se dressant en périphérie du fond (3) et comportant la couche métallique (3a), ledit procédé comprenant les étapes où :
a) on dispose, dans des plans sensiblement parallèles entre eux, une plaque plane à base d'aluminium (30c) entre une plaque plane métallique (30a) et une plaque à base d'acier (30b)creuse en forme de coupelle, la plaque plane à base d'aluminium (30c) et la plaque à base d'acier (30b) ayant, dans lesdits plans, des largeurs respectivement inférieures à celle de la plaque métallique (30a),
b) on chauffe les plaques (30a, 30b, 30c) jusqu'au moins à une température de ramollissement de la plaque à base d'aluminium (30c),
c) - à une température où la plaque plane à base d'aluminium (30c) est ramollie, on frappe la plaque à base d'acier (30b) vers la plaque métallique (30a),
- et on déforme la plaque métallique (30a) de façon à former ledit fond (3) et ladite paroi latérale (5), chaque plaque (30a, 30b, 30c) devenant une partie au moins d'une dite couche (3a, 3b, 3c), la masse d'aluminium que présente la plaque plane à base d'aluminium (30c) étant concentrée dans la coupelle, la plaque à base d'acier (30b), la plaque à base d'aluminium (30c) et la plaque métallique (30a) adhérant entre-elles.

2. Procédé de fabrication selon la revendication 1, **caractérisé en ce que**, lors de l'étape c) :
- c1) on frappe d'abord la plaque à base d'acier (30b) vers la plaque métallique (30a), à ladite température où la plaque à base d'aluminium (30c) est ramollie,
- c2) puis, après cette étape de frappe, on déforme la plaque métallique (30a) de façon à former le fond (3) et la paroi latérale (5).

3. Procédé de fabrication selon l'une au moins des revendications précédentes, **caractérisé en ce que**, pour la plaque métallique (30a), on utilise une plaque à base d'aluminium (30c).

4. Procédé de fabrication selon la revendication 2 ou les revendications 2 et 3, **caractérisé en ce qu'**on conduit l'étape c2) à température ambiante.

5. Procédé de fabrication selon l'une au moins des revendications précédentes, la couche à base d'acier (3b) est un disque plein ayant une face inférieure creusée d'empreintes (9) concaves de rigidification.

6. Procédé de fabrication selon l'une au moins des revendications précédentes, **caractérisé en ce que** lors de l'étape a), on utilise une plaque à base d'acier (30b) creuse en forme de coupelle (30b) présentant un fond (3) et une paroi latérale (5).

7. Procédé de fabrication selon la revendication 5, **caractérisé en ce que** lors de l'étape c), seule la plaque métallique (30a) est déformée par pliure pour former le récipient (1).

8. Procédé de fabrication selon l'une au moins des revendications 1 à 4, **caractérisé en ce qu'**un bord périphérique (30b3) de la plaque à base d'acier (30b) et la plaque métallique (30a) sont déformés lors de l'étape c).

9. Procédé de fabrication d'un récipient de cuisson selon l'une au moins des revendications 1 à 7, **caractérisé en ce que** la température de la plaque à base d'aluminium (30c) lors de l'étape c) est supérieure à 350°C.

10. Procédé de fabrication d'un récipient de cuisson selon l'une au moins des revendications 1 à 9, **caractérisé en ce qu'**avant l'étape de frappe c), les plaques (30a, 30b, 30c) sont fixées ensemble par soudure.

11. Procédé de fabrication d'un récipient de cuisson selon l'une au moins des revendications précédentes, **caractérisé en ce que** le rapport entre l'épaisseur de la paroi latérale (5) et l'épaisseur du fond (3) est inférieure à 0,6 ou l'épaisseur du fond (3) est supérieure ou égale à 5mm ou l'épaisseur de la paroi latérale (5) étant inférieure à 4mm.

## Patentansprüche

1. Verfahren zur Herstellung eines Kochbehälters (1), umfassend einen Boden (3) mit einer Metallschicht (3a), einer Schicht auf der Grundlage von Aluminium (3c) und einer Schicht auf der Grundlage von Stahl (3b) und eine seitliche Wand (5), die auf dem Umfang des Bodens (3) steht und die Metallschicht (3a) umfasst, wobei das Verfahren die Schritte aufweist, bei denen:
a) auf im Wesentlichen zueinander parallelen Ebenen eine flache Platte auf der Grundlage von Aluminium (30c) zwischen einer metallischen flachen Platte (30a) und einer hohlen Platte auf der Grundlage von Stahl (30b) in Form einer Kupelle angeordnet wird, (30c) wobei die flache Platte auf der Grundlage von Aluminium (30c) und die Platte auf der Grundlage von Stahl (30b) auf den Ebenen Breiten aufweisen, die jeweils geringer als diejenige der metallischen Platte (30a) sind,
b) die Platten (30a, 30b, 30c) bis auf mindestens eine Erweichungstemperatur der Platte auf der Grundlage von Aluminium (30c) erhitzt werden,
c) - auf eine Temperatur, bei der die flache Platte auf der Grundlage von Aluminium (30c) erweicht wird, die Platte auf der Grundlage von Stahl (30b) hin zur metallischen Platte (30a) geschlagen wird,
- und die metallische Platte (30a) derart verformt wird, dass sie den Boden (3) und die seitliche Wand (5) bildet, wobei jede Platte (30a, 30b, 30c) mindestens ein Teil einer der Schichten (3a, 3b, 3c) wird, wobei die Aluminiummasse, die die flache Platte auf der Grundlage von Aluminium (30c) darstellt, in der Kupelle konzentriert ist, wobei die Platte auf der Grundlage von Stahl (30b), die flache Platte auf der Grundlage von Aluminium (30c) und die metallische Platte (30a) aneinanderhaften.

2. Verfahren zur Herstellung nach Anspruch 1, **dadurch gekennzeichnet, dass**, beim Schritt c):
- c1) zunächst die Platte auf der Grundlage von Stahl (30b) hin zur metallischen Platte (30a) bei der Temperatur geschlagen wird, bei der die Platte auf der Grundlage von Aluminium (30c) erweicht wird,
- c2) dann, nach diesem Schritt des Schlagens, die metallische Platte (30a) derart verformt wird, dass sie den Boden (3) und die seitliche Wand (5) bildet.

3. Verfahren zur Herstellung nach mindestens einem der vorhergehenden Ansprüche, **dadurch gekennzeichnet, dass** für die metallische Platte (30a) eine Platte auf der Grundlage von Aluminium (30c) verwendet wird.

4. Verfahren zur Herstellung nach Anspruch 2 oder den Ansprüchen 2 und 3, **dadurch gekennzeichnet, dass** der Schritt c2) bei Umgebungstemperatur durchgeführt wird.

5. Verfahren zur Herstellung nach mindestens einem der vorhergehenden Ansprüche, **dadurch gekennzeichnet, dass** die Schicht auf der Grundlage von Stahl (3b) eine feste Scheibe mit einer hohlen unteren Seite aus konkaven Versteifungsaufdrucken (9) ist.

6. Verfahren zur Herstellung nach mindestens einem der vorhergehenden Ansprüche, **dadurch gekennzeichnet, dass** bei Schritt a) eine hohle Platte auf der Grundlage von Stahl (30b) in Form einer Kupelle (30b) verwendet wird, die einen Boden (3) und eine seitliche Wand (5) aufweist.

7. Verfahren zur Herstellung nach Anspruch 5, **dadurch gekennzeichnet, dass**, bei Schritt c) nur die metallische Platte (30a) durch Abbiegen verformt wird, um den Behälter (1) zu bilden.

8. Verfahren zur Herstellung nach mindestens einem der Ansprüche 1 bis 4, **dadurch gekennzeichnet, dass** eine Umfangskante (30b3) der Platte auf der Grundlage von Stahl (30b) und der metallischen Platte (30a) bei Schritt c) verformt wird.

9. Verfahren zur Herstellung eines Kochbehälters nach mindestens einem der Ansprüche 1 bis 7, **dadurch gekennzeichnet, dass** die Temperatur der Platte auf der Grundlage von Aluminium (30c) bei Schritte c) größer als 350 °C ist.

10. Verfahren zur Herstellung eines Kochbehälters nach mindestens einem der Ansprüche 1 bis 9, **dadurch gekennzeichnet, dass** vor dem Schritt des Schlagens c) die Platten (30a, 30b, 30c) durch Löten miteinander verbunden werden.

11. Verfahren zur Herstellung eines Kochbehälters nach mindestens einem der vorhergehenden Ansprüche, **dadurch gekennzeichnet, dass** die Beziehung zwischen der Dicke der seitlichen Wand (5) und der Dicke des Bodens (3) kleiner als 0,6 6 ist oder die Dicke des Bodens (3) größer oder gleich 5 mm oder die Dicke der seitlichen Wand (5) kleiner als 4 mm ist.

## Claims

1. Method for manufacturing a cooking vessel (1) comprising a bottom (3) comprising a metal layer (3a), an aluminium layer (3c) and a steel layer (3b), and a lateral wall (5) rising at the periphery of the bottom (3) and comprising the metal layer (3a), said method comprising the steps where:
a) in planes substantially parallel between them, a flat aluminium plate (30c) is arranged between a flat metal plate (30a) and a hollow steel plate (30b) in the shape of a cup, the flat aluminium plate (30c) and the steel plate (30b) having, in said planes, widths that are respectively less than that of the metal plate (30a),
b) the plates (30a, 30b, 30c) are heated to at least a softening temperature of the aluminium plate (30c),
c) - at a temperature where the flat aluminium plate (30c) is softened, the steel plate (30b) is struck to the metal plate (30a),
- and the metal plate (30a) is deformed in such a way as to form said bottom (3) and said lateral wall (5),
each plate (30a, 30b, 30c) becoming a part at least of one said layer (3a, 3b, 3c), with the mass of aluminium that the flat aluminium plate (30c) presents being concentrated in the cup, the steel plate (30b), the flat aluminium plate (30c) and the metal plate (30a) adhering between them.

2. Method for manufacturing according to claim 1, **characterised in that**, during the step c):
- c1) firstly the steel plate (30b) is struck to the metal plate (30a), at said temperature where the aluminium plate (30c) is softened,
- c2) then, after this step of striking, the metal plate (30a) is deformed in such a way as to form the bottom (3) and the lateral wall (5).

3. Method for manufacturing according to at least one of the preceding claims, **characterised in that**, for the metal plate (30a), an aluminium plate (30c) is used.

4. Method for manufacturing according to claim 2 or claims 2 and 3, **characterised in that** the step c2) is conducted at ambient temperature.

5. Method for manufacturing according to at least one of the preceding claims, the steel layer (3b) is a solid disc that has an inside face hollowed with concave stiffening imprints (9).

6. Method for manufacturing according to at least one of the preceding claims, **characterised in that** during the step a), use is made of a hollow steel plate (30b) in the shape of a cup having a bottom (3) and a lateral wall (5).

7. Method for manufacturing according to claim 5, **characterised in that** during the step c), only the metal plate (30a) is deformed by folding in order to form the vessel (1).

8. Method for manufacturing according to at least one of claims 1 to 4, **characterised in that** a peripheral edge (30b3) of the steel plate (30b) and the metal plate (30a) are deformed during the step c).

9. Method for manufacturing a cooking vessel according to at least one of claims 1 to 7, **characterised in that** the temperature of the aluminium plate (30c) during the step c) is greater than 350°C.

10. Method for manufacturing a cooking vessel according to at least one of claims 1 to 9, **characterised in that** before the step of striking c), the plates (30a, 30b, 30c) are fastened together by welding.

11. Method for manufacturing a cooking vessel according to at least one of the preceding claims, **characterised in that** the ratio between the thickness of the lateral wall (5) and the thickness of the bottom (3) is less than 0.6 or the thickness of the bottom (3) is greater than or equal to 5mm or the thickness of the lateral wall (5) being less than 4mm.
